# EUROPÄISCHE PATENTSCHRIFT

(11) **EP 0 452 652 B1**
(45) Veröffentlichungstag und Bekanntmachung des Hinweises auf die Patenterteilung: **26.01.1994**
(21) Anmeldenummer: 91103214.2
(22) Anmeldetag: 04.03.1991
(51) Int. Cl.: B29C 43/58, B29C 43/24, B29B 7/56, B29B 7/72

(54) **Verfahren und Vorrichtung zur Herstellung einer Dichtungsplatte auf einem Kalander**
Method and apparatus for producing a sealing sheet on a calender
Procédé et appareil pour produire une plaque d'étanchéité sur une calandre

(30) Priorität: 09.04.1990 DE 4011427
(43) Veröffentlichungstag der Anmeldung: 23.10.1991
(73) Patentinhaber: PAUL TROESTER MASCHINENFABRIK, D-30519 Hannover (DE)
(72) Erfinder: Ramm, Hans-Friedbert, Dr. Dipl.-Ing., W-3005 Hemmingen-Arnum (DE)
(74) Vertreter: Junius, Walther, Dr.

(56) Entgegenhaltungen:
- DD-A- 231 540
- DE-A- 2 659 529
- GB-A- 2 162 872
- US-A- 3 599 288
- US-A- 3 600 747

## Beschreibung

Die Erfindung betrifft ein Verfahren und eine Vorrichtung zur Herstellung einer Dichtungsplatte auf einem Kalander, der eine geheizte Walze großen Durchmessers und eine ungeheizte Walze kleinen Durchmessers besitzt und der eine Steuerungsvorrichtung für die Antriebsmotoren und die Temperaturen der Heizwalze und der Andrückwalze aufweist, wobei man dem Walzenspalt eine mit Lösungsmittel versetzte Rohmischung vorlegt und durch Temperatursteuerung in Abhängigkeit von der Zeit, von der Anzahl der Heizwalzenumdrehungen und der Heizwalzendrehgeschwindigkeit eine Platte auf der Heizwalze aufbaut, die auf dieser vulkanisiert.

Für die Herstellung von faserverstärkten Flachdichtungen, die in der Technik an zahlreichen Stellen benötigt werden, benutzt man sogenannte Dichtungsplattenkalander, die eine beheizte Walze besitzen, auf der die Platten aufgewalzt und ausvulkanisiert werden, und eine gekühlte Walze, die als Anpreßwalze für den Aufbau dient und zumeist hydraulisch angepreßt wird.

Die Dichtungen werden dabei aus einem Gemisch von in Lösungsmitteln streichfähig gemachtem Kautschuk und Fasern, welche die Festigkeit des Fertigproduktes ergeben, hergestellt. Traditionell wurden als Festigkeitsträger Asbestfasern verwendet, da die Plattenherstellung und -verwendung aus thermischen Gründen andere Fasern ausschlossen. Asbest ist jedoch aus Gründen der Gesundheitsgefahren in zunehmendem Maße unerwünscht und wird in neuerer Zeit, sofern möglich, durch hochfeste und thermisch beständige Kunstfasern ersetzt.

An die Präzision der Walzenrundlaufgenauigkeit, der Walzenoberflächengüte, der Temperaturhöhe und -genauigkeit, der gleichmäßigen Walzenandruckkraft und vor allem auch der hohen Genauigkeit der beiden Walzenumfangsgeschwindigkeiten (des Gleichlaufes) werden bei Verwendung der Kunstfasern sehr hohe Anforderungen gestellt.

Bei der Dichtungsplattenherstellung auf dem Kalander haben neben den bereits erwähnten Maschineneigenschaften noch zahlreiche Details Einfluß, so z.B.:
- die Temperaturhöhe der Heizwalze. Sie ist entscheidend für die Vulkanisationsleistung und damit für die Aufbaugeschwindigkeit der Platte.
- die Temperaturgenauigkeit. Sie hat Bedeutung in Bezug auf die Gleichmäßigkeit der Ausvulkanisation.
- die Arbeitsgeschwindigkeit der Walzen. Sie hängt von verschiedenen Parametern, wie z.B. der Haftung der Masse auf der Walzenoberfläche ab und ergibt unter Berücksichtigung der Vulkanisationsgeschwindigkeit die Zahl der Plattenüberrollungen während des Zyklus durch die Anpreßwalze und bestimmt damit die Verdichtung und Qualität der Platte.
- der Druck in den Preßzylinder links/rechts der Anpreßwalze. Er ist wichtig für die Gleichmäßigkeit der Dicke der erzeugten Platte.
- der Linien-Anpreßdruck der Anpreßwalze. Er ist entscheidend wichtig für die Verdichtung der Platte.
- Korrektur der Walzendurchbiegung. Zur Erzielung optimaler Bedingungen wird eine Gegenbiegevorrichtung für die Anpreßwalze angewendet, die entsprechend der jeweiligen Anpreßkraft eingestellt wird.
- die Anpreßkraft. Sie muß je nach der Mischungssorte und der Plattendicke optimiert werden.
- die Geschwindigkeitseinstellung beider einzeln angetriebener Walzen zueinander, die normalerweise genau gleich sein muß, gelegentlich aber eine extrem geringe, aber genaue Friktionseinstellung bedingt.
- die Beschickung der Masse in Bezug auf die Menge und die optimale Verteilung über die Länge des Walzenspaltes, wodurch sich die Gleichmäßigkeit der Plattentoleranz über die Arbeitsbreite ergibt.
- eine Veränderung der Parameter nach Beginn des Plattenaufbaues in Abhängigkeit der zunehmenden Plattendicke, z.B. des Preßdruckes, der Geschwindigkeit mit dickenbedingter Abnahme der Vulkanisationsgeschwindigkeit, Zahl der Überrollungen u.a.m.

Bei den traditionellen Werkstoffen der Dichtungsplatten, also bei denen mit Asbestfaserverstärkung, genügte zumeist in Bezug auf die Führung dieses komplizierten Arbeitsprozesses die Einstellung und die laufende Korrektur der Produktionsparameter durch den Bedienungsmann, der auch die Beschickung des Kalanders vornahm und aufgrund seiner Erfahrung alle anderen Werte nach Bedarf so gut es ging optimierte.

Aufgrund der Forderung nach asbestfreien Dichtungsplatten und der dadurch bedingten Einführung von hochfesten temperaturbeständigen Kunstfasern ist aber die Verarbeitung der Mischungen sehr viel schwieriger geworden. Insbesondere ist die Auffindung und Einhaltung optimaler Arbeitsparameter teilweise so problematisch geworden, daß nur ganz besonders erfahrene Bedienungsleute noch in der Lage sind, einwandfreie Dichtungsplatten herzustellen. Trotzdem entsteht bei der Plattenherstellung sehr viel Ausschuß, der wirtschaftlich nicht tragbar ist.

Die Erfindung vermeidet die Nachteile des Standes der Technik. Der Erfindung liegt die Aufgabe zugrunde, Voraussetzungen für die dem Plattenaufbau besser angepaßte Steuerung des Herstellungsverfahrens von insbesondere kunstfaserverstärkten Dichtungsplatten zu schaffen, bei dem eine stets gleichbleibende hohe Qualität der erzeugten Dichtungsplatten erzielt wird.

Die Erfindung erreicht dieses dadurch, daß am Umfang der Heizwalze mindestens eine Temperaturmeßstelle für die Oberflächentemperatur der auf der Heizwalze in Erzeugung befindlichen Platte vorgesehen ist, und daß man diese gemessene Temperatur den weiteren Entscheidungen über alle zukünftigen bzw. weiteren Steuerungsmaßnahmen zugrunde legt.

Dazu geht man bei der Herstellung der Dichtungsplatte so vor, daß man während des ganzen Herstellungsverfahrens ständig die Temperatur der Oberfläche der in der Herstellung befindlichen Platte mißt und in Abhängigkeit von dieser Temperatur die Temperatur der Heizwalze, die Zahl der Heizwalzenumdrehungen, die Drehgeschwindigkeit der Heizwalze und/oder der Kaltwalze, die auf die Andrückwalze wirkende Andruckkraft, die Zuführung der Rohmischung und/oder die Zufuhr von Lösungsmittel auf die Plattenoberfläche regelt.

Da die zu verarbeitende Masse aus einer mittels Lösungsmitteln verarbeitungsfähig gemachten Kunststoffmischung besteht, welche mit den temperaturbeständigen Kunstfasern, die in der fertigen Platte die Festigkeit gewährleisten, vermischt ist, verdampft das Lösungsmittel, wenn diese Masse nach dem Aufbringen auf die Heizwalze des Kalanders erwärmt wird. Dieser Vorgang erfolgt während der ständigen Drehbewegung der Heizwalze, bei der die Preßwalze entsprechend der Zahl der Überrollungen für eine Verdichtung der Masse trotz dieser Verdampfung sorgt. Dabei beginnt die wichtige Phase der Vulkanisation der jeweiligen Plattenschichten erst nach völliger Verdampfung der Lösungsmittelpartikel, da erst dann die Temperaturerhöhung eintreten kann, die zur Vulkanisation nötig ist. Erfolgt nun erfindungsgemäß die Prozeßsteuerung in Abhängigkeit von der Oberflächentemperatur der in der Herstellung befindlichen Platte, so kann eine bestmögliche Abstimmung der Phasen der Lösungsmittelverdampfung und der beginnenden Vulkanisation erfolgen, so daß durch diese Steuerung aufgrund der Oberflächentemperatur der Arbeitsprozeß optimal ablaufen kann.

Zweckmäßig ist es, wenn man als zweiten bestimmenden Parameter die erzeugte Plattendicke in die Regelung des Ablaufes des Herstellungsprozesses eingehen läßt.

Um den Arbeitsprozeß zu optimieren ist es zweckmäßig, wenn man den Arbeitsablauf des Kalanders durch einen programmgesteuerten Prozessor regelt, der die einzelnen Arbeitsabläufe in Abhängigkeit von der Temperatur der Oberfläche der in der Erzeugung befindlichen Platte als prozeßablaufbestimmenden Parameter und von der Dicke der in der Erzeugung befindlichen Platte ablaufen läßt. Die übrigen prozeßbestimmenden Parameter werden dann vom Prozessor mit in die Regelung einbezogen.

Die im Fahrrezept gespeicherten Prozeßdaten werden somit erfindungsgemäß nach theoretisch oder empirisch ermittelten Funktionen bzw. Formeln gemäß der jeweiligen Massenoberflächentemperatur so modifiziert, daß diese Massetemperatur möglichst konstante Werte in optimaler Höhe annimmt und beibehält. Hierbei sind besonders die Walzendrehzahl, die Geschwindigkeitsdifferenz der beiden Walzen (Friktion), der Anpreßdruck und damit auch die Gegenbiegung der Prozeßwalze in die erweitere Prozeßführung einbezogen.

Vorteilhaft kann es sein, mehrere Temperaturmeßfühler auf einen gemeinsamen Träger anzuordnen, der parallel zur Heizwalzenoberfläche und zur Heizwalzenachse im Kalandergestell angeordnet ist. Durch die Verwendung mehrerer Temperaturmeßfühler können Ungleichmäßigkeiten ausgeregelt werden, z.B. durch Zuführung von zusätzlichem Lösungsmittel auf die Oberfläche, und dadurch Dichtungsplatten höchster Qualität und Gleichmäßigkeit der Qualität erzeugt werden.

Das Wesen der Erfindung ist nachstehend anhand eines in der Zeichnung schematisch dargestellten Ausführungsbeispieles näher erläutert. Es zeigen:

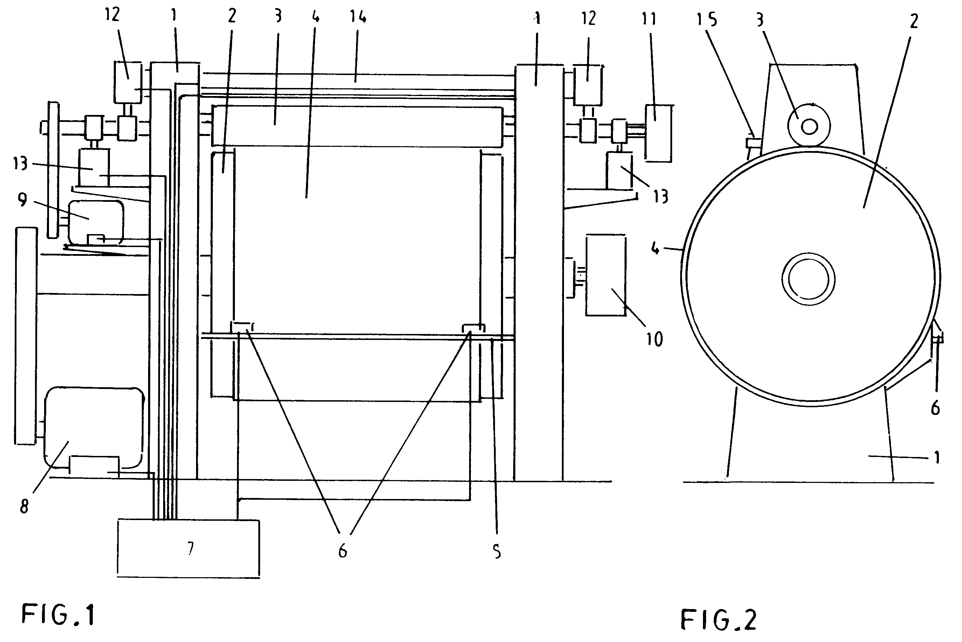

- Fig. 1: eine Frontseitenansicht des Kalanders,
- Fig. 2: eine Seitenansicht des Kalanders.

In den Ständern 1 des Kalanders ist die Heizwalze 2 und die Andrückwalze 3 gelagert. In den Walzenspalt wird eine mittels Lösungsmitteln streichfähig gemachte Kunststoffmischung eingelegt, die zu der sich auf der Heizwalze 2 schichtartig aufbauenden Dichtungsplatte geformt wird. An den Ständern 1 ist ein Träger 5 für Temperaturmeßfühler 6 angeordnet, die die gemessene Temperatur an den Prozessor 7 weiterleiten. Dieser weist weitere Eingänge für nicht dargestellte Geber auf, mit denen die Plattendicke, die Umrollungszahl, die Drehgeschwindigkeit der Walzen u.a. gemessen werden. An die Ausgänge des Prozessors 7 sind Steuerungsleitungen angeschlossen, die zu den Antriebsmotoren 8, 9 der Heizwalze und der Andrückwalze sowie zu der der Heizwalze zugeordneten Heizvorrichtung 10 bzw. einem dieser Heizvorrichtung zugeordneten Steuerventil und zu der der Andruckwalze 3 eventuell zugeordneten Kühlvorrichtung 11 bzw. einem dieser Kühlvorrichtung zugeordneten Steuerventil, zu der Andrückvorrichtung 12 und der Gegenbiegevorrichtung 13 und zu eventuell vorhandenen anderen Vorrichtungen wie beispielsweise der Beschickungsvorrichtung 14 führen. Der Prozessor läßt den Arbeitsprozeß in Abhängigkeit der von den Temperaturmeßfühlern 6 gemessenen Temperatur und der von den Plattendickemeßvorrichtungen 15 ablaufen.

## Patentansprüche

1. Verfahren zur Herstellung einer Dichtungsplatte auf einem Kalander, der eine geheizte Walze großen Durchmessers und eine ungeheizte Walze kleinen Durchmessers besitzt, bei dem man dem Walzenspalt eine mit Lösungsmittel versetzte Rohmischung vorlegt und durch Temperatursteuerung in Abhängigkeit von der Zeit, von der Anzahl der Heizwalzenumdrehungen und der Heizwalzendrehgeschwindigkeit eine Platte auf der Heizwalze aufbaut, die auf dieser vulkanisert,
dadurch gekennzeichnet,
daß man während des ganzen Herstellungsverfahrens ständig die Temperatur der Oberfläche der in der Herstellung befindlichen Platte mißt und in Abhängigkeit von dieser Temperatur die Temperatur der Heizwalze, die Zahl der Heizwalzenumdrehungen, die Drehgeschwindigkeit der Heizwalze und/oder Kaltwalze, die auf die Andrückwalze wirkende Andruckkraft, die Zuführung der Rohmischung und/oder die Zufuhr von Lösungsmittel auf die Plattenoberfläche regelt.

2. Verfahren nach Anspruch 1,
dadurch gekennzeichnet,
daß man als zweiten bestimmenden Parameter die erzeugte Plattendicke in die Regelung des Ablaufes des Herstellungsprozesses eingehen läßt.

3. Verfahren nach Anspruch 1 und 2,
dadurch gekennzeichnet,
daß man den Arbeitsablauf des Kalanders durch einen programmgesteuerten Prozessor regelt, der die einzelnen Arbeitsabläufe in Abhängigkeit von der Temperatur der Oberfläche der in der Erzeugung befindlichen Platte als prozeßablaufbestimmenden Parameter und von der Dicke der in der Erzeugung befindlichen Platte ablaufen läßt.

4. Kalander zur Herstellung einer Dichtungsplatte,
der eine geheizte Walze großen Durchmessers und eine ungeheizte Walze kleinen Durchmessers besitzt und der eine Steuerungsvorrichtung für die Antriebsmotoren und die Temperaturen der Heizwalze und der Andrückwalze aufweist,
dadurch gekennzeichnet,
daß am Umfang der Heizwalze (2) mindestens eine Temperaturmeßstelle (6) für die Oberflächentemperatur der auf der Heizwalze (2) in Erzeugung befindlichen Platte (4) vorgesehen ist.

5. Kalander nach Anspruch 4,
dadurch gekennzeichnet,
daß der Ausgang des Temperaturmeßfühlers (6) an den Eingang des Prozessors (7) geschaltet ist.

6. Kalander nach Anspruch 4 und 5,
dadurch gekennzeichnet,
daß mehrere Temperaturmeßfühler (6) auf einem gemeinsamen Träger (5) angeordnet sind, der Parallel zur Heizwalzenoberfläche und zur Heizwalzenachse im Kalandergestell (1) angeordnet ist.

## Claims

1. A process for producing a sealing plate on a calender which comprises a heated roll of large diameter and an unheated roll of small diameter, wherein a raw mixture to which solvent has been added is supplied to the roll gap and by temperature control in dependence upon the time, the number of rotations of the hot roll and the rotation speed of the hot roll, a plate is constructed on the hot roll and is vulcanised thereon, characterised in that during the entire production process the temperature of the surface of the plate which is being produced is continuously measured, and in dependence upon this temperature the temperature of the hot roll, the number of rotations of the hot roll, the rotation speed of the hot roll and/or cold roll, the pressure force acting on the pressure roll, the supply of the raw mixture and/or the supply of solvent to the plate surface are regulated.

2. A process as claimed in Claim 1, characterised in that by way of second defining parameter, the produced plate thickness is included in the regulation of the execution of the production process.

3. A process as claimed in Claim 1 and 2, characterised in that the operating sequence of the calender is regulated by a programme-controlled processor which causes the individual operating sequences to be executed in dependence upon the temperature of the surface of the plate being produced by way of process-flow-defining parameter and in dependence upon the thickness of the plate which is being produced.

4. A calender for the production of a sealing plate which comprises a heated roll of large diameter and an unheated roll of small diameter and which comprises a control device for the drive motors and the temperatures of the hot roll and the pressure roll, characterised in that at the periphery of the hot roll (2) there is provided at least one temperature measuring point (6) for the surface temperature of the plate (4) being produced on the hot roll (2).

5. A calender as claimed in Claim 4, characterised in that the output of the temperature sensor (6) is connected to the input of the processor (7).

6. A calender as claimed in Claim 4 and 5, characterised in that a plurality of temperature sensors (6) are arranged on a common carrier (5) which is arranged in parallel to the surface of the hot roll and the axis of the hot roll in the calender frame (1).

## Revendications

1. Procédé pour fabriquer une plaque d'étanchéité dans une calandre, qui possède un cylindre chauffé de grand diamètre et un cylindre non chauffé de faible diamètre, et selon lequel on amène à la fente entre les cylindres une matière première mélangée à un solvant et grâce à une commande de la température en fonction du temps, du nombre des rotations du cylindre chauffé et de la vitesse de rotation du cylindre chauffé, on forme, sur le cylindre chauffé, une plaque qui est vulcanisée sur ce dernier,
caractérisé en ce
que pendant l'ensemble du procédé de fabrication, on mesure en permanence la température de la surface de la plaque en cours de fabrication et qu'en fonction de cette température, on règle la température du cylindre chauffé, le nombre de rotations du cylindre chauffé, la vitesse de rotation du cylindre chauffé et/ou du cylindre froid, la force de serrage agissant sur le cylindre de serrage, l'envoi de la matière première et/ou l'envoi d'un solvant à la surface de la plaque.

2. Procédé selon la revendication 1, caractérisé en ce qu'on introduit en tant que second paramètre déterminant, l'épaisseur obtenue de la plaque dans la régulation du déroulement du processus de fabrication.

3. Procédé selon les revendications 1 et 2, caractérisé en ce qu'on règle le cycle de travail de la calandre au moyen d'un processeur commandé par un programme et qui exécute les différents cycles de travail en fonction de la température de la surface de la plaque en cours de fabrication, en tant que paramètre déterminant l'exécution du processus, et en fonction de l'épaisseur de la plaque en cours de fabrication.

4. Calandre pour fabriquer une plaque d'étanchéité qui possède un cylindre chauffé de grand diamètre et un cylindre non chauffé de faible diamètre et comporte un dispositif de commande pour les moteurs d'entraînement et les températures du cylindre chauffé et du cylindre de serrage, caractérisée en ce que sur la circonférence du cylindre chauffé (2) est prévu au moins un point (6) de mesure de la température superficielle de la plaque (4) en cours de formation sur le cylindre chauffé (2).

5. Calandre selon la revendication 4, caractérisée en ce que la sortie du capteur de la température (6) est raccordée à l'entrée du processeur (7).

6. Calandre selon les revendications 4 et 5, caractérisée en ce que plusieurs capteurs de température (6) sont disposés sur un support commun (5), qui est disposé parallèlement à la surface du cylindre chauffé et à l'axe du cylindre chauffé dans le châssis (1) de la calandre.
